# EUROPÄISCHE PATENTANMELDUNG

(11) **EP 4 312 154 A1**
(43) Veröffentlichungstag der Anmeldung: **31.01.2024**
(21) Anmeldenummer: 22187801.0
(22) Anmeldetag: 29.07.2022
(51) Int. Cl.: G06N 3/04, G06N 3/08, G06F 21/00

(54) **VERFAHREN ZUM TRAINIEREN EINES NEURONALEN NETZES ZUM KLASSIFIZIEREN VON DATEIEN IN DATEIKLASSEN, VERFAHREN ZUM KLASSIFIZIEREN VON DATEIEN IN DATEIKLASSEN SOWIE DATEIKLASSIFIZIERUNGSEINRICHTUNG**

(71) Anmelder: Siemens Aktiengesellschaft, 80333 München (DE)
(72) Erfinder: Zwanzger, Johannes, 85579 Neubiberg (DE)
(74) Vertreter: Siemens Patent Attorneys

(57) **Zusammenfassung**

Bei dem Verfahren zum Trainieren eines neuronalen Netzes (NN) zum Klassifizieren von Dateien (FIL) in Dateiklassen (CLAO, CLA1) wird eine Mehrzahl von Testdateien (xᵤ₁, xᵤ₂, xᵤ₃, xₚ₁, xₚ₂, xₚ₃) herangezogen, welche jeweils einer Dateiklasse zugeordnet sind, wobei die Testdateien (**Xᵤ₁, Xᵤ₂, Xᵤ₃, Xp₁, Xp₂, Xp₃**) jeweils in Bitfolgen (BIF) zerlegt werden, die der zuvor zugeordneten Dateiklasse (CLAO, CLA1) zugeordnet bleiben, wobei das neuronale Netz (NN) mit den Bitfolgen (BIF) trainiert wird.

Bei dem Verfahren zum Klassifizieren mindestens einer Datei (FIL) in Dateiklassen wird ein neuronales Netz (NN) herangezogen, welches nach einem Verfahren nach einem der vorhergehenden Ansprüche trainiert ist oder wird und aus der Datei (FIL) werden mindestens zwei unterschiedliche Ausschnitte in Form von Bitfolgen (BIF) herangezogen und die Bitfolgen (BIF) mit dem neuronalen Netz (NN) jeweils in Kandidatendateiklassen klassifiziert und abhängig von den Kandidatendateiklassen wird eine Dateiklasse (CLAO, CLA1) bestimmt.

Die Dateiklassifizierungseinrichtung weist mindestens ein erstes neuronales Netz (NN) auf, welches mittels eines Verfahrens zum Trainieren eines neuronalen Netzes (NN) zur Klassifizierung von Dateien (FIL) in Dateiklassen (CLAO, CLA1) trainiert worden ist und/oder welches ausgebildet ist, ein Verfahren zum Klassifizieren mindestens einer Datei (FIL) in Dateiklassen auszuführen.

## Beschreibung

Die Erfindung betrifft ein Verfahren zum Trainieren eines neuronalen Netzes zum Klassifizieren von Dateien in Dateiklassen, ein Verfahren zum Klassifizieren von Dateien in Dateiklassen sowie eine Dateiklassifizierungseinrichtung.

Insbesondere im Bereich der IT-Sicherheit, d. h. der Informations- und/oder Funktionssicherheit, stellt sich regelmäßig die Aufgabe, Dateien zu klassifizieren. So kann etwa Schadcode in einer Datei mit einem Schutztool verschleiert sein. Somit kann eine erkannte vorherige Anwendung eines Schutztools auf eine Datei auf eine Beeinträchtigung der IT-Sicherheit hindeuten. Eine Klassifizierung von Dateien kann insbesondere aufdecken, ob ein solches Schutztool zum Einsatz kam oder nicht. So kann eine Datei mit Sicherheitstools geschützt werden oder ungeschützt verbleiben. Zur Verarbeitung solcher Dateien, etwa im Bereich von Fertigungs- und/oder Automatisierungsanlagen, ist ein solches Klassifizieren in Dateiklassen regelmäßig erforderlich.

Unter einem Klassifizieren von Dateien, im Rahmen der vorliegenden Anmeldung auch als Klassifikation von Dateien bezeichnet, versteht man die Zuordnung einer Datei zu genau einer von zwei oder mehr vorgegebenen Dateiklassen. Im Fall von genau zwei Dateiklassen spricht man von einem binären Klassifizieren, andernfalls von einer multinomialen Klassifikation. Beim binären Klassifizieren können Dateiklassen entweder Endpunkte einer kontinuierlichen Skala bilden, etwa einer kontinuierlichen Skala zwischen den Endpunkten "große Datei" und "kleine Datei" bei der Klassifikation von Dateilängen, wobei in diesem Beispiel eine klare, eindeutige Klassifizierung nur in den Endbereichen der kontinuierlichen Skala möglich ist.

Es kann aber auch eine eindeutige Klassifizierung anhand einer Information über das Vorhandensein oder die Abwesenheit einer bestimmten Eigenschaft erfolgen: eine Eigenschaft liegt also entweder vor oder die Eigenschaft liegt nicht vor. Eine solche Eigenschaft kann etwa die Eigenschaft "Datei enthält ASCII-Text" sein, welche entweder vorliegt oder nicht vorliegt. Beim multinomialen Klassifizieren können die Dateiklassen in mehr als zwei Dateiklassen eingeordnet werden. So können vorausgewählte Dateitypen solche Dateiklassen bilden, etwa die Dateitypen "Excel-Datei", "PDF-Datei" und "JPEG-Datei".

Es ist bekannt, ein solches Klassifizieren derart durchzuführen, dass die zu klassifizierende Datei nach dem String '%PDF' am Anfang der Datei sucht. Ein solches Klassifizieren ist perfekt möglich, solange der String in der Datei in genau dieser Ausprägung vorkommt. Bei neuen Versionen von Dateitypen allerdings können sich solche Strings geringfügig ändern. Bei einer Änderung von Strings jedoch funktioniert ein solches Klassifizieren nicht mehr.

Grundsätzlich können auch neuronale Netze zum Klassifizieren von Dateien eingesetzt werden. Aber auch neuronale Netze stellen bei fortgesetztem Training auf eine Erkennung solcher Strings ab, sodass der Einsatz von neuronalen Netzen insoweit keinen nennenswerten Vorteil aufweist.

Es ist daher Aufgabe der Erfindung, ein gegenüber dem Stand der Technik verbessertes Verfahren zum Trainieren eines neuronalen Netzes zum Klassifizieren von Dateien in Dateiklassen sowie ein verbessertes Verfahren zum Klassifizieren von Dateien in Dateiklassen zu schaffen und eine gegenüber dem Stand der Technik verbesserte Dateiklassifizierungseinrichtung anzugeben.

Bei dem erfindungsgemäßen Verfahren zum Trainieren eines neuronalen Netzes zur Klassifizierung von Dateien in Dateiklassen wird eine Mehrzahl von Testdateien herangezogen, welche jeweils einer Dateiklasse zugeordnet sind, wobei die Testdateien jeweils in Bitfolgen zerlegt werden, die der zuvor zugeordneten Dateiklasse zugeordnet bleiben und das neuronale Netz mit den Bitfolgen trainiert wird.

Mittels des erfindungsgemäßen Verfahrens können neuronale Netze anders als bislang bekannt vorteilhaft zu einem sehr flexiblen Erkennen von Dateiklassen eingesetzt werden, indem neuronale Netze geeignet mit Testdateien trainiert werden. Erfindungsgemäß werden die Testdateien, d. h. die Trainingsdateien, vorteilhaft derart aufbereitet, dass das neuronale Netz sein Urteil nicht auf sehr spezielle, starr definierte Muster in den Inhalten der Testdateien, etwa der Art "das dritte Byte hat immer den Wert 17" ausrichten muss. Vielmehr richtet sich das neuronale Netz deutlich stärker als bislang bekannt auf strukturelle Eigenschaften der Inhalte der Testinhalte aus.

Mittels der erfindungsgemäß in Bitfolgen zerlegten Testdateien wird das neuronale Netz gezielt daraufhin trainiert, die Inhalte der Testdateien anhand allgemeiner struktureller Merkmale, wie etwa "in mehr oder weniger regelmäßigen Abständen kommt in der Datei ein Komma vor" zu klassifizieren. Erfindungsgemäß kann daher das neuronale Netz nicht auf starre Muster abstellen, welche bei einer Änderung dieses Musters, etwa infolge einer Anpassung eines Dateiformats infolge neuer Dateiversionen oder neuen Dateistandards, nicht mehr oder zumindest nicht mehr zuverlässig erkannt werden können. Mittels des erfindungsgemäßen Verfahrens bleibt die Klassifikation vielmehr stabil gegenüber Änderungen, die zu einem Zeitpunkt nach dem Training in den Dateiformaten vorgenommen werden, solange zumindest die grundsätzliche Struktur der Dateiinhalte erhalten bleibt. Eine herkömmliche Klassifikation dagegen, die etwa nur nach dem String '%PDF' am Anfang der Datei sucht, funktioniert nur so lange perfekt, solange der String dort in genau dieser Ausprägung vorkommt. Wird dieser String in einer neuen Version des Formates aber nur minimal verändert oder an eine andere Stelle verschoben, funktioniert die Erkennungsregel überhaupt nicht mehr. Erfindungsgemäß kann ein erstes neuronales Netz daher deutlich gegenüber dem Stand der Technik verbessert trainiert werden. Das derart trainierte neuronale Netz ist vorteilhaft für ein flexibles, gegenüber Anpassungen von Dateiformaten wenig anfälliges, Klassifizieren ausgebildet.

Vorzugsweise werden bei dem Verfahren gemäß der Erfindung die Trainingsdateien vollständig in Bitfolgen zerlegt. Mit anderen Worten geht zweckmäßig jedes Bit der Trainingsdateien in mindestens eine Bitfolge, mit der das neuronale Netz trainiert wird, ein. Auf diese Weise werden sämtliche Information, welche die Trainingsdateien enthalten, zum Trainieren des neuronalen Netzes herangezogen.

Bei dem erfindungsgemäßen Verfahren wird das neuronale Netz zweckmäßig mit den Bitfolgen in ungeordneter Aufeinanderfolge, insbesondere in randomisierter Aufeinanderfolge, trainiert. Auf diese Weise wird verhindert, dass das neuronale Netz die Aufeinanderfolge der Bitfolgen aufeinander als Information interpretiert und folglich dieser Aufeinanderfolge der Bitfolgen eine Bedeutung beimisst, die das Klassifizieren mittels des neuronalen Netzes beeinflussen kann. Mittels der ungeordneten, insbesondere randomisierten Aufeinanderfolge bildet die Aufeinanderfolge kein für das neuronale Netz auswertbares Muster. Stattdessen wird das neuronale Netz darauf trainiert, allgemeinere strukturelle Merkmale, die in der Bitfolge erkennbar sind, für das Klassifizieren heranziehen.

In einer bevorzugten Weiterbildung des erfindungsgemäßen Verfahrens ist das neuronale Netz ein rekurrentes erstes neuronales Netz, d. h. ein solches erstes neuronales Netz, welches im Englischen als "recurrent neural network" bekannt ist. Ein solches "Recurrent Neural Network" weist eine Art "Gedächtnis" auf und besitzt somit die Möglichkeit, eine vorangehende Anzahl von Bits einer Bitfolge in die Klassifikationsentscheidung für die aktuelle Bitfolge eingehen zu lassen. Dies ermöglicht es insbesondere, das neuronale Netz auf Bitfolgen beliebiger Länge anzuwenden, statt aufgrund seines Inputformats von vornherein auf Bitfolgen fester Länge beschränkt zu sein. Außerdem würden Bitfolgen fester Länge beim Training dazu führen, dass das Netz jeden strukturellen Zusammenhang zwischen aufeinanderfolgenden Bits für jede Position innerhalb der festgelegten Blocklänge eigenständig lernen muss, während bei der Verwendung rekurrenter Netze von vornherein ein Zusammenhang mit dem lokalen Kontext, d. h. mit der "Vorgeschichte" der letzten Bitfolgen, unabhängig von der genauen Position der aktuellen Bitfolge innerhalb der Datei, gelernt wird.

Bei dem erfindungsgemäßen Verfahren zum Klassifizieren mindestens einer Datei in Dateiklassen wird ein erstes neuronales Netz herangezogen, welches gemäß einem erfindungsgemäßen Verfahren zum Trainieren eines neuronalen Netzes zur Klassifizierung von Dateien in Dateiklassen, wie es vorhergehend beschrieben ist, trainiert ist oder trainiert wird und es werden bei dem Verfahren aus der Datei mindestens zwei unterschiedliche Ausschnitte in Form von Bitfolgen herangezogen und die Bitfolgen werden jeweils mit dem ersten neuronalen Netz in Kandidatendateiklassen klassifiziert und abhängig von den Kandidatendateiklassen wird eine Dateiklasse bestimmt. Da erfindungsgemäß ein mittels des erfindungsgemäßen Verfahrens zum Trainieren eines ersten neuronalen Netzes zur Klassifizierung von Dateien in Dateiklassen trainiertes erstes neuronales Netz herangezogen wird, ist mittels des erfindungsgemäßen Verfahrens vorteilhaft eine flexible, d. h. gegenüber Anpassungen eines jeweiligen Dateiformats robuste, Klassifizierung von Dateien möglich.

Bevorzugt werden bei dem Verfahren gemäß der Erfindung die Dateien vollständig in Bitfolgen zerlegt. Somit werden sämtliche in einer Datei enthaltene Informationen zum Klassifizieren der Datei herangezogen. Die Zuverlässigkeit des Klassifizierens der Datei wird in dieser Weiterbildung des erfindungsgemäßen Verfahrens weiter verbessert.

In einer bevorzugten Weiterbildung des erfindungsgemäßen Verfahrens wird die Klassifikation für mehrere unterschiedliche Bitfolgen der jeweils mindestens einen Datei unternommen, wobei die Bitfolgen zusammen genommen vorzugsweise die mindestens eine Datei bilden. Mittels der mehreren unterschiedlichen Bitfolgen kann der Informationsgehalt der Datei besser ausgeschöpft werden. Insbesondere in demjenigen Fall, in dem die mehreren unterschiedlichen Bitfolgen zusammengenommen die jeweilige Datei bilden, wird der gesamte zur Verfügung stehende Inhalt der Datei zum Klassifizieren herangezogen.

Bei dem Verfahren gemäß der Erfindung werden die Kandidatendateiklassen, in welche die Bitfolgen klassifiziert werden, zusammen mit der Position der jeweiligen Bitfolge innerhalb der Datei ermittelt. Auf diese Weise kann die Position der Bitfolge als zusätzliche Information beim finalen Klassifizieren der Datei herangezogen werden.

Bei dem erfindungsgemäßen Verfahren wird die Dateiklasse, d. h. das auf den Kandidatendateiklassen beruhende Endergebnis des Verfahrens zum Klassifizieren, geeigneterweise derart bestimmt, dass für jeweils eine Datei diejenige Kandidatendateiklasse, in welche die meisten Bitfolgen klassifiziert werden, als Dateiklasse für diese Datei bestimmt wird.

Bei dem Verfahren gemäß der Erfindung wird vorzugsweise die Dateiklasse derart bestimmt, dass für jede Kandidatendateiklasse ein Maß für eine Zugehörigkeit der Bitfolge zu dieser Kandidatendateiklasse, die das erste neuronale Netz der Bitfolge zuordnet, ermittelt und zur Bestimmung der Dateiklasse herangezogen wird.

Ein solches Maß für eine Zugehörigkeit der Bitfolge zu dieser Kandidatendateiklasse kann auch als Klassifikationswert bezeichnet werden. Der Klassifikationswert bildet üblicherweise eine Zahl zwischen 0 und 1 und kennzeichnet eine klare Zuordnung zur jeweiligen Kandidatendateiklasse etwa mittels eines Wertes näher bei 0 oder näher bei 1, während eine unklare Zuordnung häufig mittels Werten nahe bei 0.5 ausgedrückt wird.

Ein solches Maß für die Zugehörigkeit der Bitfolge zu dieser Kandidatendateiklasse kann vorzugsweise in der Art eines Durchschnittswerts, insbesondere in der Art eines arithmetischen Mittels oder eines geometrischen Mittels oder eines Quadratmittels, für die mehreren Bitfolgen der Datei ermittelt und herangezogen werden. Alternativ oder zusätzlich und ebenfalls bevorzugt kann ein Verlauf dieses Maßes für die Zugehörigkeit von Bitfolgen zur Kandidatendateiklasse entlang ihrer Position innerhalb der Datei ermittelt und zur Bestimmung der Dateiklasse herangezogen werden. Insbesondere kann anhand des Verlaufs eine Häufung von Werten des Maßes bei bestimmten Positionen der Bitfolgen und/oder lokale Abweichungen und/oder statistische Auffälligkeiten von Werten dieses Maßes ermittelt und zur Bestimmung der Dateiklasse herangezogen werden.

In einer besonders vorteilhaften Weiterbildung des erfindungsgemäßen Verfahrens wird die Dateiklasse
mittels eines zweiten neuronalen Netzes bestimmt, dem für jede Bitfolge vorzugsweise die Kandidatendateiklasse, in die sie vom ersten neuronalen Netz klassifiziert worden ist und/oder für jede Kandidatendateiklasse ein Maß für die Zugehörigkeit der Bitfolge zu dieser Kandidatendateiklasse, die das erste neuronale Netz der Bitfolge zuordnet, vorzugsweise gemeinsam mit der Position, als Eingangsdaten übermittelt werden.

Die erfindungsgemäße Dateiklassifizierungseinrichtung weist mindestens ein erstes neuronales Netz auf, welches mittels eines erfindungsgemäßen Verfahrens zum Trainieren eines neuronalen Netzes zur Klassifizierung von Dateien in Dateiklassen, wie es vorhergehend beschrieben ist, trainiert worden ist und/oder welches ausgebildet ist, ein erfindungsgemäßes Verfahren zum Klassifizieren mindestens einer Datei in Dateiklassen, wie es vorhergehend beschrieben ist, auszuführen.

In einer bevorzugten Weiterbildung des erfindungsgemäßen Verfahrens wie vorhergehend beschrieben wird die Dateiklassifikationseinrichtung herangezogen, um eine IT-Sicherheitseigenschaft von Dateien, welche Auswirkungen hat auf eine Daten- und/oder Funktionssicherheit einer die Dateien nutzenden Automatisierungsanlage, als Dateiklasse heranzuziehen und abhängig von der Dateiklasse, in welche die Dateiklassifikationseinrichtung die Datei klassifiziert, eine IT-Sicherheitsmaßnahme zu ergreifen. Besonderes bevorzugt handelt es sich bei der Automatisierungsanlage um eine Fertigungsanlage. Zweckmäßig ist die IT-Sicherheitsmaßnahme ein Versehen der Datei mit einer angestrebten IT-Sicherheitseigenschaft, wenn das Klassifizieren mittels der Dateiklassifikationseinrichtung ergibt, dass die Datei die angestrebte IT-Sicherheitseigenschaft nicht aufweist oder eine Einschränkung von Zugriffsrechten bei einer Nutzung oder Ausführung der Datei oder eine verstärkte Überwachung bei der Nutzung oder der Ausführung der Datei, wenn diese die angestrebte IT-Sicherheitseigenschaft nicht aufweist. Insbesondere kann Schadcode in einer Datei mit einem Schutztool verschleiert sein. Somit kann eine erkannte vorherige Anwendung eines Schutztools auf eine Datei auf eine Beeinträchtigung der IT-Sicherheit bedeuten. Folglich wird es in einer besonders vorteilhaften Weiterbildung der Erfindung als angestrebte IT-Sicherheitseigenschaft einer Datei angesehen, dass eine vorherige Anwendung eines solchen Schutztools auf diese Datei nicht erfolgt ist. Entsprechend lässt sich die Erfindung alternativ auch auf ein Verfahren zur Erhöhung der IT-Sicherheit einer Automatisierungs- und/oder Fertigungsanlage beschreiben, bei welchem mittels der Klassifikation der Datei eine Sicherheitseigenschaft der Datei festgestellt wird und aufgrund der festgestellten Sicherheitseigenschaft bei der Automatisierungs- und/oder Fertigungsanlage eine IT-Sicherheitsmaßnahme ergriffen wird.

Nachfolgend wird die Erfindung anhand eines in der Zeichnung dargestellten Ausführungsbeispiels näher erläutert. Es zeigen:
- Fig. 1: in Ablaufdiagramm für den Ablauf des erfindungsgemäßen Verfahrens zum Training eines neuronalen Netzes zum Klassifizieren von Dateitypen in einer Schemazeichnung und
- Fig. 2: eine erfindungsgemäße Dateiklassifizierungseinrichtung schematisch in einer Prinzipskizze.

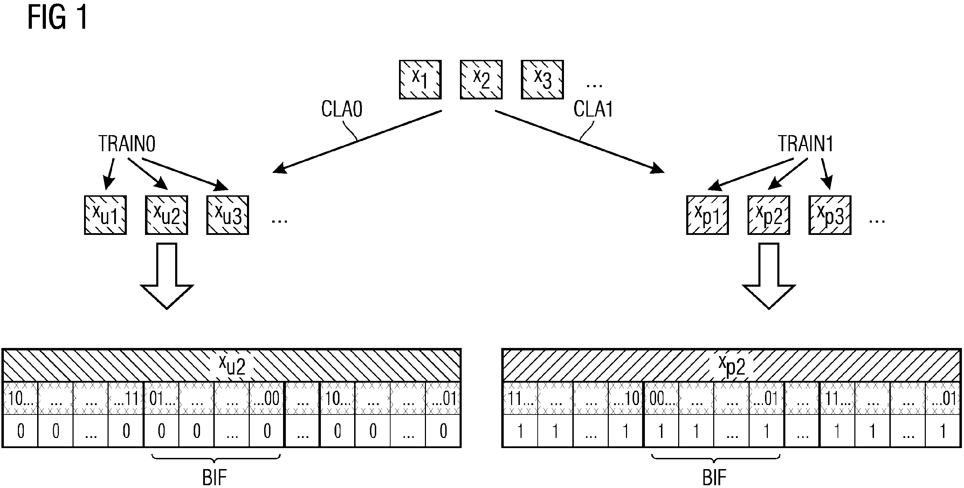

Bei dem in Fig. 1 dargestellten Verfahren wird ein erstes neuronales Netz NN zum Klassifizieren von Dateitypen trainiert. Dazu werden dem neuronalen Netz NN jeweils Trainingsdaten TRAINO, TRAIN1 als Eingangsdaten übergeben, zu welchem das neuronale Netz NN eine zugehörige Klassifizierung in Form von Dateiklassen CLAO, CLA1 als jeweiliges Ausgangsdatum ermitteln und ausgeben soll.

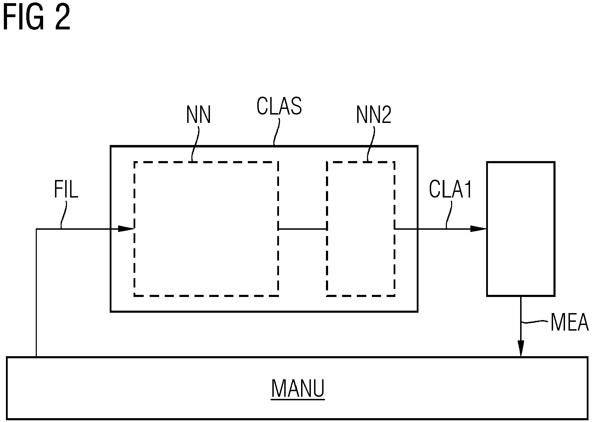

Mittels des Trainierens soll das neuronale Netz NN in die Lage versetzt werden, zu den Dateiklassen CLAO, CLA1 a priori unbekannte Dateien FIL (s. Fig. 2) einzusortieren. Zu diesem Zweck wird das neuronale Netz mit Hilfe eines Trainingsdatensatzes TRAINO von Trainingsdateien xᵤ₁, xᵤ₂, xᵤ₃, welche sämtlich der Dateiklasse CLAO zugeordnet sind, sowie mit Hilfe eines Trainingsdatensatzes TRAIN1 von Trainingsdaten xₚ₁, xₚ₂, xₚ₃, welche sämtlich der Dateiklasse CLA1 zugeordnet sind, trainiert.

Somit besteht jedes Trainingsbeispiel aus einer Trainingsdatei xᵤ₁, xᵤ₂, xᵤ₃, xₚ₁, xₚ₂,xₚ₃ und einem Label in Form der Dateiklasse CLAO, CLA1, wobei die Dateiklasse CLAO, CLAO im dargestellten Ausführungsbeispiel einen Wert 0 oder 1 besitzt und diejenige Dateiklasse angibt, der die einer Trainingsdateien xᵤ₁, xᵤ₂, xᵤ₃, xₚ₁, xₚ₂, xₚ₃ bei korrekter Klassifikation zugeordnet werden muss. Das Vorgehen beim Training des neuronalen Netzes NN, etwa die Zurückhaltung eines kleinen Teils der Trainingsdaten für Validierungszwecke, folgt in an sich bekannter Weise üblichen Standards und soll hier nicht weiter ausgeführt werden. Im vorliegend beschriebenen Ausführungsbeispiel soll eine zuvor erfolgte Anwendung eines Schutztools auf eine ausführbare Binärdatei erkannt werden. Die Anwendung des Schutztools würde es erlauben, Schadcode in der Datei zu verschleiern, was potentiell ein Sicherheitsrisiko für ein Gerät oder eine Anlage, auf welchem die Datei zur Anwendung kommen soll, darstellen würde. Dazu werden die Trainingsdatensätze TRAINO, TRAIN1 derart bereitgestellt, dass das Schutztool auf einen Datensatz x₁, x₂, x₃ zunächst nicht angewandt wird, sodass der unveränderte Trainingsdatensatz TRAIN 1 mit einer Menge ungeschützter Trainingsdateien xᵤ₁, xᵤ₂, xᵤ₃ in Form von Binaries resultiert und andererseits das Schutztool auf den Datensatz x₁, x₂, x₃ angewendet wird, wodurch die geschützten Trainingsdateien xₚ₁, xₚ₂, xₚ₃, welche ebenfalls Binaries bilden, entstehen. Der Trainingsdatensatz TRAINO umfasst also die Trainingsdateien xᵤ₁, xᵤ₂, xᵤ₃ zusammen mit der Dateiklasse CLAO mit dem Label "O", kennzeichnend, dass es sich um ungeschützte Trainingsdateien. Der Trainingsdatensatz TRAIN1 hingegen umfasst mit den Trainingsdaten xₚ₁, xₚ₂, xₚ₃ zusammen mit der Dateinklasse CLA1 mit dem Label "1" (geschützt). Die beiden Trainingsdatensätze TRAIN1, TRAIN1 bilden zusammengenommen den gemeinsamen Trainingsdatensatz T aus.

Grundsätzlich können in weiteren Ausführungsbeispielen, welche im Übrigen dem dargestellten Ausführungsbeispiel entsprechen, die Trainingsdatensätze TRAINO, TRAIN1 auch auf andere Weise gewonnen werden. So ist es insbesondere nicht erforderlich, dass der Trainingsdatensatz einer Dateiklasse CLA1 überhaupt auf dem Trainingsdatensatz der jeweils anderen Dateiklasse CLAO beruht. Es ist in weiteren Ausführungsbeispielen auch nicht erforderlich, dass genau dieselbe Anzahl von Trainingsdateien für jede einzelne Dateiklasse vorliegt, sondern die Anzahlen von Trainingsdateien für die jeweilige Dateiklasse können grundsätzlich auch voneinander abweichen.

Die Besonderheit des dargestellten Verfahrens liegt im Aufbereiten der Trainingsdateien xᵤ₁, xᵤ₂, xᵤ₃, xₚ₁, xₚ₂, xₚ₃ dergestalt, dass das neuronale Netz NN sein Urteil verstärkt auf strukturelle Eigenschaften der Dateiinhalte der Trainingsdateien xᵤ₁, xᵤ₂, xᵤ₃, xₚ₁, xₚ₂, xₚ₃ ausrichten muss und sich nicht auf sehr spezielle Muster der bestimmten Dateitypen CLAO, CLA1 abstützen kann wie etwa "das dritte Byte hat immer den Wert 17".

Dazu wird bei dem Verfahren wie folgt vorgegangen:
Sämtliche Trainingsdateien xᵤ₁, xᵤ₂, xᵤ₃, xₚ₁, xₚ₂, xₚ₃ aus dem gemeinsamen Trainingsdatensatz T werden jeweils aufgeteilt in kürzere Bitfolgen BIF. Die Aufteilung kann mit einheitlicher Länge, hier beispielsweise 1 Kilobyte, oder mit variabler Länge für jede Bitfolge BIF erfolgen. Geht die Aufteilung am Ende einer Trainingsdatei xᵤ₁, xᵤ₂, xᵤ₃, xₚ₁, xₚ₂, xₚ₃ nicht auf, so kann der verbleibende Rest der Trainingsdatei Trainingsdatei xᵤ₁, xᵤ₂, xᵤ₃, xₚ₁, xₚ₂, xₚ₃ zum Beispiel verworfen oder mit Dummybits, beispielsweise Nullbits, aufgefüllt werden.

Im Anschluss werden die verkürzten Bitfolgen BIF zusammen mit den zu ihren jeweiligen Trainingsdateien xᵤ₁, xᵤ₂, xᵤ₃, xₚ₁, xₚ₂, xₚ₃, denen die Bitfolgen BIF jeweils entstammen, gehörenden Labels für die Dateiklassen CLAO, CLA1 zur Menge der finalen Trainingspaare zusammengesetzt; die Menge der finalen Trainingspaare enthält also sämtliche Paare aus Bitfolgen BIF und Labels für die Dateiklassen CLAO, CLA1 zu allen Trainingsbeispielen des gemeinsamen Trainingsdatensatzes T. Die Reihenfolge, mit der die Bitfolgen BIF und die zugehörigen Labels dem neuronalen Netz während des Trainings präsentiert werden, wird anschließend - wie üblich - zu Beginn jeder Trainingsepoche randomisiert.

Dieses Vorgehen hat folgende Vorteile:
Der Hauptvorteil besteht darin, dass das neuronale Netz NN eine einzelne Datei in aller Regel nicht "im Ganzen" präsentiert bekommt, sondern das Netz einzelne Dateien leidglich begrenzt auf die Länge der einzelnen Bitfolgen BIF und nicht in der richtigen Reihenfolge, sondern vielmehr in beliebiger Reihenfolge entgegennimmt. Daher kann das neuronale Netz NN sich für die Klassifikation der Dateien nicht auf das Vorliegen spezieller Werte an bestimmten Positionen einer Datei verlassen und muss stattdessen allgemeinere strukturelle Merkmale, die im Ausschnitt einer Bitfolge BIF erkennbar sind, für die Klassifikation heranziehen.

Es ist für den Trainingsvorgang gemäß dem dargestellten Verfahren zudem förderlich, dass dem neuronalen Netz NN bei gleicher Gesamtdatenmenge des Inputs insgesamt eine größere Zahl von Labels, also von zugeordneten Dateiklassen CLAO, CLA1 präsentiert wird, nämlich ein Label pro Bitfolge BIF statt eines pro Datei des Datensatzes x₁, x₂, x₃.

Die Bytes innerhalb der Bitfolgen BIF werden der Eingangsschicht des neuronalen Netzes NN sowohl beim Training als auch in der späteren Anwendung nicht als ordinale Werte zwischen 0 und 255, sondern als Folge von jeweils 8 Bits mit Werten zwischen 0 und 1 übergeben. Andernfalls würden Verzerrungen dadurch entstehen, dass höherwertige Bits eines Bytes übermäßigen Anteil an der Aktivierung eines Inputneurons erhalten und niederwertige umgekehrt einen zu geringen. An und für sich signifikante Muster in niederwertigen Bits könnten dann etwa im hohen Zufallsrauschen höherwertiger Bits untergehen.

Im dargestellten Ausführungsbeispiel ist das neuronale Netz NN ein sogenanntes "Recurrent Neural Network", auch als rekurrentes Netz bezeichnet, welches eine Art "Gedächtnis" und somit die Möglichkeit besitzt, vorangehende Bytes BIF einer Bitfolge in die Klassifikationsentscheidung für das aktuelle Byte eingehen zu lassen. Dies ermöglicht insbesondere, das neuronale Netz auf Bitfolgen BIF beliebiger Länge anzuwenden, statt aufgrund seines Inputformats von vornherein auf Bitfolgen BIF fester Länge beschränkt zu sein. Außerdem würden Bitfolgen BIF fester Länge beim Training dazu führen, dass das neuronale Netz jeden strukturellen Zusammenhang zwischen aufeinanderfolgenden Bits der Datei für jede Position innerhalb der festgelegten Blocklänge eigenständig lernen muss, während bei der Verwendung eines rekurrenten neuronalen Netzes NN von vornherein ein Zusammenhang mit dem lokalen Kontext, d. h. der "Vorgeschichte" der letzten Bytes, unabhängig von der genauen Position des aktuellen Bytes, gelernt wird.

Das dargestellte Ausführungsbeispiel kann in einem weiteren Ausführungsbeispiel dahingehend erweitert werden, dass die Anwendung des neuronalen Netzes NN auf die Eingangsdaten in Gestalt der Datei des Datensatzes FIL einen kontinuierlichen Klassifikationsverlauf OB(t) über die gesamte Datei FIL liefert, indem der Output des neuronalen Netzes nach jedem Byte BIF der Datei FIL an Position t festgehalten wird. Grundsätzlich können in weiteren Ausführungsbeispielen der Erfindung die Eingangsdaten des neuronalen Netzes NN aus einer abweichenden Anzahl von Bits bestehen, etwa aus jeweils nur einem einzelnen Bit anstelle von 8 Bits für ein Byte BIF bestehen, so dass sogar eine bitgenaue Ausgabe OB(t), bei der t die Bitposition innerhalb der Datei FIL bezeichnet, möglich wird.

Auf den vom Netz ermittelten Klassifikationsverlauf OB(t) für das Maß für die Zugehörigkeit der Bitfolge zu dieser Kandidatendateiklasse, welche je Bitfolge BIF innerhalb der Datei FIL ermittelt wird, wird anschließend eine finale Klassifikationsfunktion f(OB(t)) angewendet. Diese Klassifikationsfunktion f(OB(t)) kann etwa als Durchschnittsbildung in der Art eines arithmetischen Mittels oder in der Identifikation einer bestimmten lokalen Häufung von stark abweichenden Werten des Klassifikationsverlaufs oder in der Identifikation von einer lokalen Häufung von ähnlichen Werten des Klassifikationsverlaufs realisiert sein. In weiteren Ausführungsbeispielen kann die Klassifikation aber auch mittels eines weiteren neuronalen Netzes NN2 (s. Fig. 2) realisiert sein: So wird beispielsweise das weitere neuronale Netz NN2 darauf trainiert, dem vom ersten neuronalen Netz NN ausgegebenen Klassifikationsverlauf OB(t) das richtige Label CLAO, CLA1 zuzuordnen.

Die in Fig. 2 dargestellte Klassifikationseinrichtung CLAS nutzt das in den vorhergehenden Ausführungsbeispielen beschriebene Training des ersten neuronalen Netzes NN, welches den Klassifikationsverlauf OB(t) an das zweite neuronale Netz NN2 übergibt. Das zweite neuronale Netz NN2 ermittelt daraus die endgültige Dateiklasse, im dargestellten Fall CLAO, und übermittelt die Dateiklasse CLAO an eine Maßnahmeneinrichtung MEA.

Die Dateien FIL, welche dem ersten neuronalen Netz NN zum Klassifizieren zugeführt werden, werden aus einem Speicher einer Fertigungseinrichtung MANU einer Fertigungsanlage ausgelesen. Die Fertigungseinrichtung MANU zieht die Dateien FIL für eine Fertigungssteuerung heran. Die Maßnahmeneinrichtung MEA unternimmt abhängig von der ermittelten Dateiklasse, d. h. abhängig von dem Urteil der Klassifikationseinrichtung CLAS, eine Anwendung einer Schutzfunktion auf die Datei FIL. Wird mittels der Klassifikationseinrichtung CLAS festgestellt, dass auf die Datei FIL ein Schutztool angewandt worden ist, welches potentiell in die Datei FIL eingebrachten Schadcode verschleiern könnte, so wird die Schutzfunktion angewandt. Im dargestellten Ausführungsbeispiel ist die Schutzfunktion durch eine Isolierung der Datei FIL in eine gesicherte Umgebung und ein intensives Monitoring bei der Nutzung der Datei FIL gegeben. Wird erkannt, dass auf Datei FIL kein Schutztool angewandt worden ist, so wird von der Anwendung der Sicherheitsfunktion abgesehen. Entsprechend lässt sich die Erfindung alternativ auch als Anwendung zur Erhöhung der IT-Sicherheit einer Fertigungsanlage beschreiben.

## Patentansprüche

1. Verfahren zum Trainieren eines ersten neuronalen Netzes (NN) zum Klassifizieren von Dateien (FIL) in Dateiklassen (CLAO, CLA1), bei welchem eine Mehrzahl von Testdateien (xᵤ₁, xᵤ₂, xᵤ₃, xₚ₁, xₚ₂,xₚ₃) herangezogen wird, welche jeweils einer Dateiklasse zugeordnet sind, wobei die Testdateien (**xᵤ₁, x**ᵤ₂, **xu3, xₚ₁, xₚ₂, xₚ₃**) jeweils in Bitfolgen (BIF) zerlegt werden, die der zuvor zugeordneten Dateiklasse (CLAO, CLA1) zugeordnet bleiben und das neuronale Netz (NN) mit den Bitfolgen (BIF) trainiert wird.

2. Verfahren nach dem vorhergehenden Anspruch, bei welchem die Testdateien (xᵤ₁, xᵤ₂, xᵤ₃, xₚ₁, xₚ₂, xₚ₃) vollständig in Bitfolgen (BIF) zerlegt werden.

3. Verfahren nach einem der vorhergehenden Ansprüche, bei welchem das neuronale Netz (NN) mit den Bitfolgen (BIF) in ungeordneter Aufeinanderfolge, insbesondere in randomisierter Aufeinanderfolge, trainiert wird.

4. Verfahren nach einem der vorhergehenden Ansprüche, bei welchem das erste neuronale Netz (NN) ein rekurrentes neuronales Netz (NN) ist.

5. Verfahren zum Klassifizieren mindestens einer Datei (FIL) in Dateiklassen, bei welchem ein solches erstes neuronales Netz (NN) herangezogen wird, welches nach einem Verfahren nach einem der vorhergehenden Ansprüche trainiert ist oder wird und bei welchem aus der Datei (FIL) mindestens zwei unterschiedliche Ausschnitte in Form von Bitfolgen (BIF) herangezogen werden und die Bitfolgen (BIF) mit dem neuronalen Netz (NN) jeweils in Kandidatendateiklassen klassifiziert werden und abhängig von den Kandidatendateiklassen eine Dateiklasse (CLAO, CLA1) bestimmt wird.

6. Verfahren nach dem vorhergehenden Anspruch, bei welchem die Trainingsdateien (xᵤ₁, xᵤ₂, xᵤ₃, xₚ₁, Xₚ₂, xₚ₃) vollständig in Bitfolgen (BIF) zerlegt werden.

7. Verfahren nach dem vorhergehenden Anspruch, bei welchem das Klassifizieren für mehrere Ausschnitte von Bitfolgen (BIF) unternommen wird, wobei die Bitfolgen (BIF) zusammen genommen vorzugsweise die mindestens eine Datei (FIL) bilden.

8. Verfahren nach einem der vorhergehenden Ansprüche, bei welchem die Kandidatendateiklassen, in welche die Bitfolgen (BIF) klassifiziert werden, zusammen mit der Position (t) der jeweiligen Bitfolge (BIF) innerhalb der Datei (FIL) ermittelt wird.

9. Verfahren nach einem der vorhergehenden Ansprüche, bei welchem die Dateiklasse (CLAO, CLA1) derart bestimmt wird, dass diejenige Kandidatendateiklasse, in welche die meisten Bitfolgen (BIF) klassifiziert werden, als Dateiklasse (CLAO, CLA1) bestimmt wird.

10. Verfahren nach einem der vorhergehenden Ansprüche, bei welchem die Dateiklasse (CLAO, CLA1) derart bestimmt wird, dass je Kandidatendateiklasse ein Durchschnittswert eines Maßes für die Zugehörigkeit der Bitfolge (BIF) zu dieser Kandidatendateiklasse, das das erste neuronale Netz (NN) der Bitfolge (BIF) zuordnet, und/oder ein Verlauf dieses Maßes entlang der Position (t) der Bitfolge (BIF) innerhalb der Datei (FIL), insbesondere eine Häufung von Werten dieses Maßes bei bestimmten Positionen (t) und/oder lokale Abweichungen und/oder statistische Auffälligkeiten von Werten dieses Maßes, ermittelt und zur Bestimmung der Dateiklasse (CLAO, CLA1) herangezogen wird.

11. Verfahren nach einem der vorhergehenden Ansprüche, bei welchem die Dateiklasse (CLAO, CLA1) mittels eines zweiten neuronalen Netzes (NN2) bestimmt wird, dem für jede Bitfolge vorzugsweise die Kandidatendateiklasse, in die sie vom neuronalen Netz (NN) klassifiziert worden ist und/oder für jede Dateiklasse ein Maß für die Zugehörigkeit der Bitfolge zu dieser Kandidatendateiklasse, die das erste neuronale Netz der Bitfolge zuordnet, vorzugsweise gemeinsam mit der Position (t), als Eingangsdaten übermittelt werden.

12. Dateiklassifizierungseinrichtung mit mindestens einem ersten neuronalen Netz (NN), welches mittels eines Verfahrens nach einem der Ansprüche 1 bis 4 trainiert worden ist und/oder welches ausgebildet ist, ein Verfahren zum Klassifizieren mindestens einer Datei nach einem der Ansprüche 5 bis 10 auszuführen.
